# EUROPEAN PATENT SPECIFICATION

(11) **EP 4 462 541 B1**
(45) Date of publication and mention of the grant of the patent: **18.11.2026**
(21) Application number: 23767143.3
(22) Date of filing: 07.03.2023
(51) Int. Cl.: H01M 10/0567, H01M 10/52, H01M 10/052

(54) **ELECTROLYTE SOLUTION ADDITIVE FOR LITHIUM SECONDARY BATTERY AND NON-AQUEOUS ELECTROLYTE SOLUTION FOR LITHIUM SECONDARY BATTERY INCLUDING THE SAME AND LITHIUM SECONDARY BATTERY**
ELEKTROLYTLÖSUNGSADDITIV FÜR EINE LITHIUM-SEKUNDÄRBATTERIE, NICHTWÄSSRIGE ELEKTROLYTLÖSUNG FÜR EINE LITHIUM-SEKUNDÄRBATTERIE, DIE DIESES ENTHÄLT, UND LITHIUM-SEKUNDÄRBATTERIE
ADDITIF DE SOLUTION ÉLECTROLYTIQUE POUR BATTERIE SECONDAIRE AU LITHIUM, SOLUTION ÉLECTROLYTIQUE NON AQUEUSE POUR BATTERIE SECONDAIRE AU LITHIUM LE CONTENANT, ET BATTERIE SECONDAIRE AU LITHIUM

(30) Priority: 08.03.2022 KR 20220029663; 06.03.2023 KR 20230029467
(43) Date of publication of application: 13.11.2024
(73) Proprietor: LG Energy Solution, Ltd., Seoul 07335 (KR)
(72) Inventor: JEONG, Jin Hyeon, Daejeon 34122 (KR); LEE, Chul Haeng, Daejeon 34122 (KR); OH, Jeong Woo, Daejeon 34122 (KR); PARK, Byung Chun, Daejeon 34122 (KR); KIM, Hyung Tae, Daejeon 34122 (KR); SEO, Young Mi, Daejeon 34122 (KR); PARK, Sung Guk, Daejeon 34122 (KR)
(74) Representative: Hoffmann Eitle
(86) International application number: PCT/KR2023/003124
(87) International publication number: WO 2023/172042

(56) References cited:
- EP-A1- 1 988 081
- CN-A- 110 661 021
- JP-A- 2003 092 137
- JP-A- 2003 123 834
- JP-A- H09 139 233
- KR-A- 20050 029 778
- KR-A- 20200 089 623
- TAKAFUMI TANAKA ET AL: "Strategy for Catalytic Chemoselective Cross-Enolate Coupling Reaction via a Transient Homocoupling Dimer", ORGANIC LETTERS, vol. 20, no. 12, 31 May 2018 (2018-05-31), US, pages 3541 - 3544, XP055704591, ISSN: 1523-7060, DOI: 10.1021/acs.orglett.8b01313

## Description

### TECHNICAL FIELD

This application claims priority from Korean Patent Application Nos. 10-2022-0029663, filed on March 8, 2022, and 10-2023-0029467, filed on March 6, 2023.

The present disclosure relates to an electrolyte solution for a lithium secondary battery with improved high-temperature durability by including an additive, and a lithium secondary battery. The additive has an excellent effect of removing decomposition products generated from a lithium salt.

### BACKGROUND ART

While personal IT devices and computer networks are developed due to the development of information society, and, as a result, the dependency of society as a whole on electrical energy has increased, there is a need to develop a technique for efficiently storing and utilizing the electrical energy.

Among the technologies developed for this purpose, a technology based on secondary batteries is the most suitable technology for various applications. Since a secondary battery may be miniaturized to be applicable to a personal IT device and may be applied to an electric vehicle and a power storage device, there emerges an interest in the secondary battery. Among these secondary battery technologies, lithium ion batteries are in the spotlight as battery systems having the theoretically highest energy density, and are currently being used in various devices.

The lithium-ion battery includes a positive electrode comprised of a transition metal oxide containing lithium, a negative electrode comprised of a carbon-based material such as graphite capable of storing lithium, an electrolyte solution that becomes a medium for transferring lithium ions, and a separator. Proper selection of these components is important to improve the electrochemical properties of the battery.

The lithium ion battery is disadvantageous in that performance degrades because a resistance increase and a capacity decrease occur during charge and discharge or storage at high temperatures. One of causes of such problem suggested is a side reaction caused by deterioration of the electrolyte solution at high temperatures, particularly deterioration due to decomposition of a lithium salt.

In particular, with respect to LiPF₆ mainly used as the lithium salt, PF₆⁻, an anion^{,} is very vulnerable to heat, it is known that the LiPF₆ generates a Lewis acid material, such as PF₅, while being thermally decomposed when the battery is exposed to high temperatures.

The Lewis acid material degrades a film formed on surfaces of the positive electrode/the negative electrode or an electrode surface structure to cause a solid electrolyte interphase (SEI) reductively decomposed on the surface of the negative electrode and dissolution of transition metal ions from the degraded surface of the positive electrode. The transition metal ions thus dissolved are re-deposited on the positive electrode to increase resistance of the positive electrode and cause loss of redox centers to reduce capacity of the secondary battery. In addition, since passivation ability of the SEI formed on the surface of the negative electrode decreases when the dissolved metal ions are electrodeposited on the negative electrode, irreversible capacity is increased while electrolyte decomposition for regeneration of the SEI and additional consumption of electrons and lithium ions are caused, and thus, cell capacity may be reduced and self-discharge of the negative electrode may be caused.

Therefore, research and development of various methods, which may maintain the passivation ability of the SEI when exposed to heat and may remove a cause of degradation of the battery at high temperatures by scavenging a by-product generated due to the decomposition of the lithium salt, are being attempted.

JPH09139233 describes a non-aqueous electrolyte secondary battery comprising a cathode, a negative electrode and a separator. Furthermore, it describes a non-aqueous electrolyte solution comprising an imidazole-based compound. Further relevant prior art is disclosed in EP 1 988 081 A1, CN 110 661 021 A and the article "Strategy for Catalytic Chemoselective Cross-Enolate Coupling Reaction via a Transient Homocoupling Dimer", from TAKAFUMI TANAKA ET AL: ORGANIC LETTERS, vol. 20, no. 12, 31 May 2018 (2018-05-31), pages 3541-3544, XP055704591, US ISSN: 1523-7060, DOI: 10.1021/acs.orglett.8b01313.

### DISCLOSURE OF THE INVENTION

### TECHNICAL PROBLEM

The present disclosure aims to provide a non-aqueous electrolyte solution for a lithium secondary battery including an additive which may scavenge a decomposition product generated from a lithium salt in an electrolyte solution.

The present disclosure also aims to provide a lithium secondary battery including the non-aqueous electrolyte solution.

### TECHNICAL SOLUTION

An aspect of the present invention provides a non-aqueous electrolyte solution for a lithium secondary battery, comprising a lithium salt, an organic solvent, and an additive which is a compound represented by Formula 1 below:

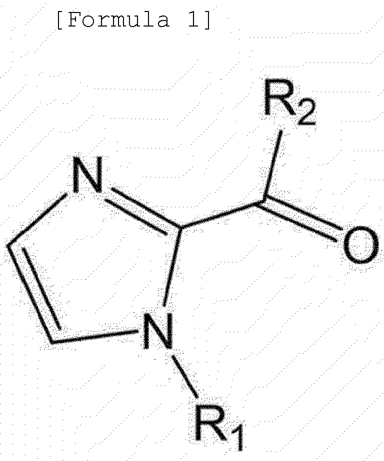

In Formula 1, R₁ and R₂ are each independently an alkyl group having 1 to 10 carbon atoms.

The additive is present in an amount of 0.05 wt% to 5.5 wt% based on the total content of the non-aqueous electrolyte solution.

According to another aspect of the present invention, the present invention provides a lithium secondary battery including the non-aqueous electrolyte solution for a lithium secondary battery.

### ADVANTAGEOUS EFFECTS

Since a compound represented by Formula 1, which is used as an electrolyte solution additive for a lithium secondary battery of the present invention, as a Lewis base material, includes a nitrogen element having an unshared electron pair, it may easily bond with a Lewis acid, and thus it may effectively scavenge a decomposition product of a lithium salt in an electrolyte solution.

If the non-aqueous electrolyte solution for a lithium secondary battery, which includes the additive, is used, a lithium secondary battery having improved cycle performance may be achieved by easily scavenging PF₅ generated due to decomposition of LiPF₆ which is caused by high temperature or moisture in the non-aqueous electrolyte solution.

### MODE FOR CARRYING OUT THE INVENTION

Hereinafter, the present disclosure will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

With respect to a lithium secondary battery, high-temperature storage characteristics are improved because a film having passivation ability is formed on surfaces of a negative electrode and a positive electrode while a non-aqueous electrolyte solution is decomposed during initial charge and discharge. However, the film may be degraded by acids, such as HF and PF₅, which are produced by pyrolysis of a lithium salt (LiPF₆, etc.) widely used in a lithium ion battery. Also, surface resistance of the electrode is increased due to a change in structure of the surface while dissolution of transition metal elements occurs from the positive electrode due to the attack of these acids, and theoretical capacity and apparent capacity may be reduced as the metal elements, which are redox centers, are lost. Furthermore, since transition metal ions thus dissolved are electrodeposited on the negative electrode reacting in a strong reduction potential range to not only consume electrons but also to destruct the film, electrolyte decomposition for regeneration of a solid electrolyte interphase (SEI) and additional consumption of electrons and lithium ions are caused. As a result, there is a limitation in that resistance of the negative electrode increases and capacity of a cell is continuously reduced as irreversible capacity is increased.

Thus, the present disclosure aims to provide a non-aqueous electrolyte solution, which may remove acids caused by the decomposition of a lithium salt, and prevent degradation of the SEI during high-temperature storage or dissolution of transition metals at the positive electrode by including a Lewis base compound capable of forming a SEI as a component of the non-aqueous electrolyte solution additive, and a lithium secondary battery including the same.

### Electrolyte Solution Additive for Lithium Secondary Battery

The non-aqueous electrolyte solution comprises an additive which is a compound represented by Formula 1:

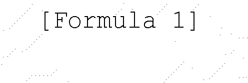

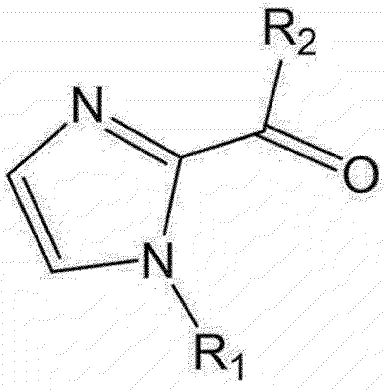

In Formula 1, R₁ and R₂ are each independently an alkyl group having 1 to 10 carbon atoms.

Since a compound represented by Formula 1 includes a carbonyl group with nitrogen elements having an unshared electron pair within one molecular structure as a Lewis base material, the electron density of carbon atoms that are present between the nitrogen elements decreases. The corresponding carbon element attracts the unshared electron pair of the nitrogen elements bonded to R₁, making the interaction stronger. Due to this action, charge localization occurs towards the nitrogen elements that reflexively forms a double bond with the carbon atoms of the imidazole functional group. It is characterized by having a higher binding energy with a Lewis acid material than a compound that does not contain a carbonyl group in its structure, such as the compound represented by Formula 2 or 3 below. Therefore, when the compound represented by Formula 1 of the present disclosure is used as an electrolyte solution additive, compared to the case where the compound represented by Formula 2 or 3 is used as an additive, the effect of scavenging lithium salt decomposition products such as HF or PF₅ is further improved in the electrolyte solution to suppress dissolution of the transition metal from the positive electrode caused by Lewis acids and to also suppress deterioration behaviors resulting from the chemical reaction of a film formed on the surface of the positive/negative electrodes. Further, as the compound represented by Formula 1 may suppress deterioration behaviors by suppressing damage to the film of the surface of the negative electrode, it is possible to prevent the additional decomposition of the electrolyte solution of the battery due to the destruction of the film, and, furthermore, high-temperature storage characteristics may be improved by alleviating self-discharge of the secondary battery.

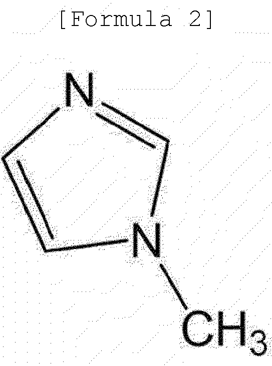

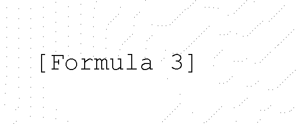

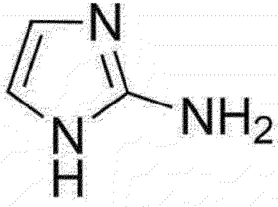

In the case where R₁ and R₂ are alkyl groups having 10 or more carbon atoms, the degree of localization of an electric charge to the functional group of imidazole is weakened so that the effect of removing Lewis acids may be relatively reduced. Therefore, in order to secure and/or strengthen the bonding energy with Lewis acids such as PF₅, R₁ and R₂ are alkyl groups having 10 or less carbon atoms.

Specifically, in Formula 1 above, R₁ and R₂ may be each independently an alkyl group having 1 to 7 carbon atoms. Also, R₁ and R₂ may be each independently an alkyl group having 1 to 5 carbon atoms. Also, R₁ may be an alkyl group having 1 to 3 carbon atoms, and R₂ may also be an alkyl group having 1 to 5 carbon atoms.

Preferably, the compound represented by Formula 1 may be at least one of the compounds represented by Formulas 1a to 1c.

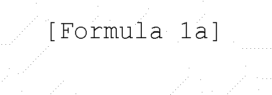

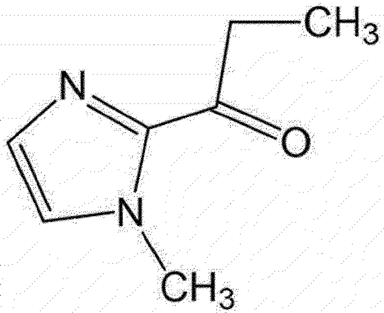

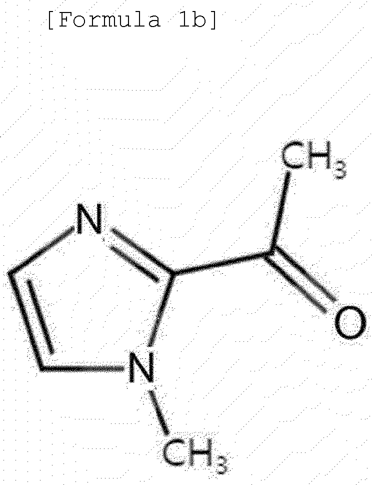

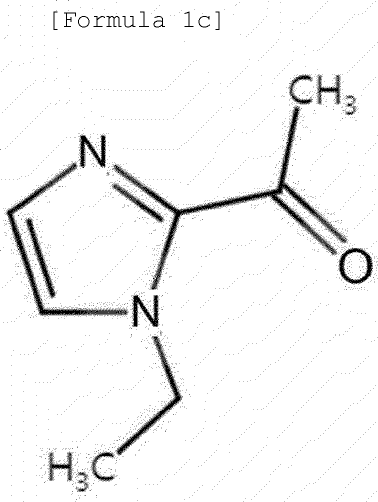

### Non-aqueous Electrolyte Solution for Lithium Secondary Battery

According to the present disclosure, the non-aqueous electrolyte solution for a lithium secondary battery includes a lithium salt, an organic solvent, and the aforementioned additive.

### (1) Lithium Salt

First, the lithium salt is described as follows.

In the non-aqueous electrolyte solution for a lithium secondary battery according to the present invention, the lithium salt typically used in an electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻ and (CF₃CF₂SO₂)₂N⁻ as an anion. Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB(LiB(C₂O₄)₂), LiCF₃SO₃, LiTFSI(LiN(SO₂CF₃)₂), LiFSI(LiN(SO₂F)₂), LiCH₃SO₃, LiCF₃CO₂, LiCH₃CO₂ and LiBETI (LiN(SO₂CF₂CF₃)₂). Specifically, the lithium salt may include a single material selected from the group consisting of LiBF₄, LiClO₄, LiPF₆, LiBOB(LiB(C₂O₄)₂), LiCF₃SO₃, LiTFSI(LiN(SO₂CF₃)₂), LiFSI(LiN(SO₂F)₂) and LiBETI (LiN(SO₂CF₂CF₃)₂) or a mixture of two or more thereof, and more specifically, may include LiPF₆.

The lithium salt may be appropriately changed in a normally usable range but may be included in a concentration of 0.8 M to 3.0 M, for example, 1.0 M to 3.0 M in the electrolyte solution to obtain an optimum effect of forming a film for preventing corrosion of a surface of an electrode.

In a case in which the concentration of the lithium salt satisfies the above range, it is possible to control the viscosity of the non-aqueous electrolyte solution so as to realize optimal impregnability, and improve the mobility of lithium ions, thereby obtaining an effect of improving capacity characteristics and cycle characteristics of a lithium secondary battery.

### (2) Organic Solvent

In addition, the organic solvent is described as follows.

The organic solvent may include a cyclic carbonate-based organic solvent, a linear carbonate-based organic solvent, or a mixed organic solvent thereof.

The cyclic carbonate-based organic solvent is an organic solvent which may well dissociate the lithium salt in the non-aqueous electrolyte solution due to high permittivity as a highly viscous organic solvent, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and may include ethylene carbonate among them.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and may specifically include ethyl methyl carbonate (EMC).

To prepare an electrolyte solution having high ionic conductivity, it is desirable to use a mixed organic solvent of the cyclic carbonate-based organic solvent and the linear carbonate-based organic solvent as the organic solvent. The cyclic carbonate-based organic solvent and linear carbonate-based organic solvent may be mixed in a volume ratio of 1:9 to 5:5, specifically in a volume ratio of 2:8 to 4:6.

In addition, the organic solvent may further include a linear ester-based organic solvent and/or a cyclic ester-based organic solvent in addition to the cyclic carbonate-based organic solvent and/or the linear carbonate-based organic solvent, if necessary.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

Also, the organic solvent may further include at least one organic solvent selected from an ether-based organic solvent, an amide-based organic solvent, and a nitrile-based organic solvent.

Any one selected from the group consisting of dimethyl ether, diethyl ether, dipropyl ether, methylethyl ether, methylpropyl ether, and ethylpropyl ether, or a mixture of two or more thereof may be used as the ether-based organic solvent.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

In the non-aqueous electrolyte solution of the present disclosure, the remainder except for the lithium salt and additives may be all organic solvents.

### (3) Electrolyte solution additive

The non-aqueous electrolyte solution for a lithium secondary battery of the present disclosure includes the aforementioned additive, which is a compound represented by Formula 1 above.

Since a description of the compound represented by Formula 1 above overlaps with that described above, the description thereof will be omitted.

In consideration of an effect of forming a stable film on the surface of the electrode and an effect of scavenging the thermal decomposition product of the lithium salt, the additive is present in the non-aqueous electrolyte solution in an amount of 0.05 wt % to 5.5 wt% based on a total weight of the non-aqueous electrolyte solution.

In the case where the amount of the compound represented by Formula 1 satisfies the above range, the dissolution of the transition metal of a positive electrode active material at high temperatures may be effectively suppressed by forming a robust film on the surface of the positive electrode while reducing disadvantages, such as the side reaction due to the additive, a reduction in capacity, and an increase in resistance, as much as possible, and excellent high-temperature durability may be achieved by effectively scavenging the thermal decomposition product of the lithium salt. If the amount of the compound represented by Formula 1 is 0.05 wt% or more, it is possible to more stably maintain the effect of scavenging the thermal decomposition product of the lithium salt such as HF or PF₅, etc. and the effect of suppressing the dissolution of the transition metals by the protection of the positive electrode during the battery operating time. Also, in a case in which the amount of the compound represented by Formula 1 is 5.5 wt % or less, the viscosity of the non-aqueous electrolyte solution may be controlled so that the optimum impregnability may be achieved, an increase in battery resistance due to the decomposition of the additive may be effectively suppressed, and degradation of rate capability or low-temperature life characteristics during high-temperature storage may be prevented by further increasing ionic conductivity in the battery.

Specifically, the compound represented by Formula 1 may be present in the amount of 0.1 wt% to 5.0 wt%, more specifically 0.1 wt% to 3.5 wt%, and preferably 0.3 wt% to 2.5 wt%.

### (4) Other Additives

The non-aqueous electrolyte solution of the present disclosure may further include other additional additives in addition to the compound represented by Formula 1, if necessary, in order to prevent the occurrence of the collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

Examples of the other additive may be at least one selected from the group consisting of a cyclic carbonate-based compound, a halogen-substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The cyclic carbonate-based compound, for example, may be vinylene carbonate (VC) or vinyl ethylene carbonate.

The halogen-substituted carbonate-based compound, for example, may be fluoroethylene carbonate (FEC).

The sultone-based compound, for example, may be at least one compound selected from the group consisting of 1,3-propane sultone (PS), 1,4-butane sultone, ethane sultone, 1-propene-1,3-sultone (PRS), 1,4-butene sultone, and 1-methyl-1,3-propene sultone.

The sulfate-based compound, for example, may be ethylene Sulfate (Esa), trimethylene Sulfate (TMS), or methyl trimethylene sulfate (MTMS).

The phosphate-based or phosphite-based compound, for example, may be at least one compound selected from the group consisting of lithium difluoro bis(oxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound may include tetraphenylborate, lithium oxalyldifluoroborate (LiODFB), or lithium bis(oxalato) borate (LiB(C₂O₄)₂, LiBOB).

The nitrile-based compound, for example, may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound, for example, may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include lithium difluorophosphate (LiDFP, LiPO₂F₂) or LiBF₄.

Specifically, at least two or more compounds of vinylene carbonate (VC), 1,3-propane sultone (PS), 1-propene 1,3-sultone (PRS), Ethylene Sulfate (Esa), lithium tetrafluoroborate (LiBF₄) and lithium difluorophosphate (LiDFP) may be mixed to be used as the other additive.

A total amount of the compound represented by Formula 1 and the other additives mixed may be in a range of 30 wt % or less, particularly 0.05 wt % to 20 wt %, and more particularly 0.05 wt % to 10 wt % based on the total weight of the non-aqueous electrolyte solution. In a case in which the total amount of the additives satisfies the above range, low-temperature output characteristics of the battery may be improved, high-temperature storage characteristics and high-temperature life characteristics may be more effectively improved, and occurrence of the side reaction of the battery due to the additives remaining after the reaction may be prevented.

### Lithium Secondary Battery

The lithium secondary battery of the invention includes a positive electrode, a negative electrode, and the aforementioned non-aqueous electrolyte solution. More specifically, the lithium secondary battery may include a positive electrode, a negative electrode, a separator disposed between the positive electrode and the negative electrode, and the aforementioned non-aqueous electrolyte solution.

After an electrode assembly, in which the positive electrode, the separator, and the negative electrode are sequentially stacked, is formed and accommodated in a battery case, the lithium secondary battery of the present disclosure may be prepared by injecting the non-aqueous electrolyte solution of the present disclosure.

The lithium secondary battery of the present disclosure may be prepared according to a conventional method known in the art and used, and a method of preparing the lithium secondary battery of the present disclosure is specifically the same as that described later.

### (1) Positive Electrode

The positive electrode may be prepared by coating a positive electrode collector with a positive electrode slurry including a positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with carbon, nickel, titanium, silver, or the like may be used.

The positive electrode active material is a compound capable of reversibly intercalating and deintercalating lithium, wherein the positive electrode active material may include a lithium transition metal oxide including lithium and at least one metal selected from cobalt, manganese, nickel, and aluminum.

Specifically, the positive electrode active material may include a lithium-manganese-based oxide with high stability and capacity characteristics of the battery, lithium iron phosphate, or a lithium-composite transition metal oxide represented by Formula 4 below having a nickel content of 70 atm% or more to achieve high capacity.

[Formula 4] Liₐ[Ni_{b}Co_{c}M¹_{d}M²ₑ]O₂

In Formula 4,
M¹ is Mn, Al or a combination thereof,
M² is Al, Zr, W, Ti, Mg, Ca, Sr, Ba,
0.8≤a≤1.2, 0.7≤b<1, 0<c<0.3, 0<d<0.3, 0≤e≤0.2.

In Formula 4, a represents an atomic fraction of lithium, and may be 0.8≤a≤1.2, specifically 0.9≤a≤1.1, and more specifically 0.9≤a≤1.05.

Also, in Formula 4, b represents an atomic fraction of nickel, and may be 0.7≤b<1, specifically 0.75≤b≤0.99, more specifically 0.8≤b≤0.95, and more specifically 0.85≤b≤0.95.

Also, in Formula 4, c represents an atomic fraction of cobalt, and may be 0<c<1.0, preferably 0.001<c<0.3, specifically 0.01≤c<0.25, more specifically 0.01≤c<0.20, and more specifically 0.1≤c<0.15.

In Formula 4, d represents an atomic fraction of the element M¹ among transition metals, and may be 0<d<0.3, preferably 0.001<d<0.25, 0.01≤d<0.20, more preferably 0.01≤d<0.20, and more specifically 0.01≤d<0.15.

In Formula 4, e represents an atomic fraction of the element M² among transition metals, and may be 0≤e≤0.2, specifically 0≤e≤0.1, and specifically 0≤e≤0.05.

Specifically, the lithium-manganese-based oxide may include LiMnO₂ or LiMn₂O₄. Specifically, the lithium iron phosphate may include LiFePO₄.

Also, the lithium-composite transition metal oxide may include at least one of Li(Ni_{0.7}Mn_{0.1}Co_{0.2})O₂, Li(Ni_{0.7}Mn_{0.15}Co_{0.15})O₂, Li(Ni_{0.8}Mn_{0.1}Co_{0.1})O₂, Li(Ni_{0.9}Co_{0.05}Mn_{0.05})O₂, Li(Ni_{0.86}Mn_{0.05}Co_{0.07}Al_{0.02})O₂ and Li(Ni_{0.9}Mn_{0.03}CO_{0.06}Al_{0.01})O₂.

The positive electrode active material may be included in an amount of 80 wt% to 99 wt%, specifically 90 wt% to 99 wt% based on a total weight of solid content in the positive electrode slurry. In this case, when the amount of the positive electrode active material is 80 wt% or less, since energy density is reduced, capacity may be reduced.

The binder is a component that assists in the binding between the active material and the conductive agent and in the binding with the current collector, wherein it is commonly added in an amount of 1 wt % to 30 wt % based on the total weight of the solid content in the positive electrode slurry. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; and a silane-based binder.

Also, the conductive agent is a material providing conductivity without causing adverse chemical changes in the battery, wherein it may be added in an amount of 1 wt % to 20 wt % based on the total weight of the solid content in the positive electrode slurry.

As a typical example of the conductive agent, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Also, the solvent may include an organic solvent, such as N-methyl-2-pyrrolidone (NMP), and may be used in an amount such that desirable viscosity is obtained when the positive electrode active material as well as optionally the binder and the conductive agent are included. For example, the solvent may be present in an amount such that a concentration of the solid content in the positive electrode slurry including the positive electrode active material as well as optionally the binder and the conductive agent is in a range of 10 wt % to 60 wt %, preferably, 20 wt % to 50 wt %.

### (2) Negative Electrode

The negative electrode may be prepared by coating a negative electrode collector with a negative electrode slurry including a negative electrode active material, a binder, a conductive agent, and a solvent, and then drying and rolling the coated negative electrode collector.

The negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Also, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating the lithium ions, a carbon-based negative electrode active material generally used in a lithium ion secondary battery may be used without particular limitation, and, as a typical example, a carbon-based negative electrode active material generally used in a lithium ion secondary battery may be used without particular limitation. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me:Mn, Fe, Pb, Ge; Me' :Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ(O<x<2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, Sn-Y (where Y is an element selected from the group consisting of alkali metal, alkaline earth metal, a Group 13 element, a Group 14 element, transition metal, a rare earth element, and a combination thereof, and is not Sn),and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po and a combination thereof.

The transition metal oxide may include a lithium-containing titanium composite oxide (LTO), a vanadium oxide, and a lithium vanadium oxide.

The negative electrode active material may be included in an amount of 80 wt % to 99 wt % based on a total weight of solid content in the negative electrode slurry.

The binder is a component that assists in the binding between the conductive agent, the active material, and the current collector, wherein it is commonly added in an amount of 1 wt % to 30 wt % based on the total weight of the solid content in the negative electrode slurry. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; and a silane-based binder. In this case, the binder may be the same as or different from the binder included in the positive electrode.

The conductive agent is a component for further improving the conductivity of the negative electrode active material, wherein the conductive agent may be added in an amount of 1 wt % to 20 wt % based on the total weight of the solid content in the negative electrode slurry. Any conductive agent may be used without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. In this case, the conductive agent may be the same as or different from the conductive agent included in the positive electrode.

The solvent may include water or an organic solvent, such as NMP and alcohol, and may be used in an amount such that desirable viscosity is obtained when the negative electrode active material as well as optionally the binder and the conductive agent are included. For example, the solvent may be present in an amount such that a concentration of the solid content in the negative electrode slurry including the negative electrode active material as well as optionally the binder and the conductive agent is in a range of 50 wt % to 75 wt %, preferably, 50 wt % to 65 wt %.

### (3) Separator

A typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery of the present disclosure, and a typical porous nonwoven fabric, for example, a nonwoven fabric formed of high melting point glass fibers or polyethylene terephthalate fibers may be used, but the present disclosure is not limited thereto.

A shape of the lithium secondary battery of the present disclosure is not particularly limited, but a cylindrical type using a can, a prismatic type, a pouch type, or a coin type may be used.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

### (Non-Aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 0.3 wt % of the compound represented by Formula 1a and 0.5 wt% of vinylene carbonate (VC), 0.5 wt% of 1,3-propane sultone (PS), 0.2 wt% of 1-propene 1,3-sultone (PRS), 1.0 wt % of Ethylene Sulfate (Esa), 0.2 wt% of lithium tetrafluoroborate (LiBF₄), and 0.8 wt % of lithium difluorophosphate (LiDFP) as other additives.

### (Secondary Battery Preparation)

A positive electrode active material (Li(Ni_{0.9}Mn_{0.03}Co_{0.06}Al_{0.01})O₂), a conductive agent (carbon black), and a binder (polyvinylidene fluoride) were added to N-methyl-2-pyrrolidone (NMP), which is a solvent, in a weight ratio of 97.6:0.8:1.6 to prepare a positive electrode slurry (solid content: 60 wt %) .A positive electrode collector (Aluminum (Al) thin film) with a thickness of 13.5 µm was coated with the positive electrode slurry, dried, and then roll-pressed to prepare a positive electrode.

A negative electrode active material (graphite:SiO=90:10 weight ratio), a conductive agent (carbon black) and a binder (SBR-CMC)were added in a weight ratio of 95.6:1.0:3.4 to DI-water (H₂O), which is a solvent, to prepare a negative electrode slurry (solid content: 60 wt %). A negative electrode collector (copper (Cu) thin film) with a thickness of 6 µm was coated with the negative electrode slurry, dried, and then roll-pressed to prepare a negative electrode.

After disposing a porous polymer separator between the prepared positive electrode and the negative electrode in a dry room, the above-prepared non-aqueous electrolyte solution (3 g) was injected to prepare a lithium secondary battery.

### Example 2

### (Non-Aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 0.05 wt % of the compound represented by Formula 1a and 0.5 wt% of vinylene carbonate (VC), 0.5 wt% of 1,3-propane sultone (PS), 0.2 wt% of 1-propene 1,3-sultone (PRS), 1.0 wt % of ethylene sulfate (Esa), 0.2 wt% of lithium tetrafluoroborate (LiBF₄), and 0.8 wt % of lithium difluorophosphate (LiDFP) as other additives.

### (Secondary Battery Preparation)

A lithium secondary battery was prepared in the same manner as in Example 1 except that the lithium secondary battery was prepared by injecting the above-prepared non-aqueous electrolyte solution (3 g).

### Example 3

### (Non-Aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 3.0 wt % of the compound represented by Formula 1a and 0.5 wt% of vinylene carbonate (VC), 0.5 wt% of 1,3-propane sultone (PS), 0.2 wt% of 1-propene 1,3-sultone (PRS), 1.0 wt % of ethylene sulfate (Esa), 0.2 wt% of lithium tetrafluoroborate (LiBF₄), and 0.8 wt % of lithium difluorophosphate (LiDFP) as other additives.

### (Secondary Battery Preparation)

A lithium secondary battery was prepared in the same manner as in Example 1 except that the lithium secondary battery was prepared by injecting the above-prepared non-aqueous electrolyte solution (3 g).

### Example 4

### (Non-Aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 5.5 wt % of the compound represented by Formula 1a and 0.5 wt% of vinylene carbonate (VC), 0.5 wt% of 1,3-propane sultone (PS), 0.2 wt% of 1-propene 1,3-sultone (PRS), 1.0 wt % of ethylene sulfate (Esa), 0.2 wt% of lithium tetrafluoroborate (LiBF₄), and 0.8 wt % of lithium difluorophosphate (LiDFP) as other additives.

### (Secondary Battery Preparation)

A lithium secondary battery was prepared in the same manner as in Example 1 except that the lithium secondary battery was prepared by injecting the above-prepared non-aqueous electrolyte solution (3 g).

### Example 5 (not in accordance with the claims)

### (Non-Aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 6.0 wt % of the compound represented by Formula 1a and 0.5 wt% of vinylene carbonate (VC), 0.5 wt% of 1,3-propane sultone (PS), 0.2 wt% of 1-propene 1,3-sultone (PRS), 1.0 wt % of ethylene sulfate (Esa), 0.2 wt% of lithium tetrafluoroborate (LiBF₄), and 0.8 wt % of lithium difluorophosphate (LiDFP) as other additives.

### (Secondary Battery Preparation)

A lithium secondary battery was prepared in the same manner as in Example 1 except that the lithium secondary battery was prepared by injecting the above-prepared non-aqueous electrolyte solution (3 g).

### Comparative Example 1

A non-aqueous electrolyte solution and a lithium secondary battery including the same were prepared in the same manner as in Example 1 except that the compound represented by Formula 1a was not added when the non-aqueous electrolyte solution was prepared.

### Experimental Examples

### Experimental Example 1. Evaluation of High-Temperature Storage

After each of the lithium secondary batteries prepared in Examples 1 to 5 and the battery prepared in Comparative Example 1 was charged at 0.33 C rate to 4.2 V under a constant current/constant voltage condition at room temperature (25°C.) and discharged at 2.5 C rate for 10 seconds, initial resistance and initial discharge capacity were measured using PNE-0506 charge/discharge equipment (manufacturer: PNE solution).

Subsequently, each secondary battery was charged at a rate of 0.33 C to 4.2V under a constant current/constant voltage condition again and was stored at 60°C for 8 weeks. After high-temperature storage for 8 weeks, resistance and discharge capacity were measured, and the results thereof are then presented in Table 2 below.

Capacity retention (%) after high-temperature charge and resistance increase rate (%) after high-temperature charge and discharge cycles were calculated using Equation 1 and Equation 2 below, and the results thereof are presented in Table 1 below. [Equation 1] 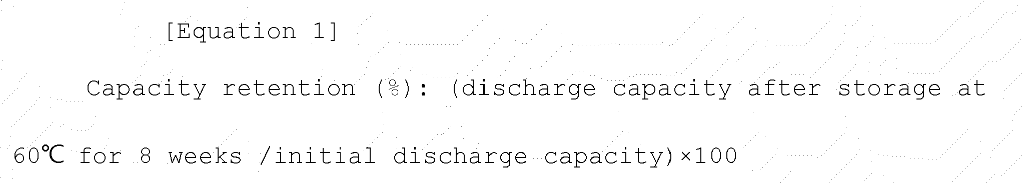 Capacity retention (%): (discharge capacity after storage at 60°C for 8 weeks /initial discharge capacity)×100 [Equation 2] 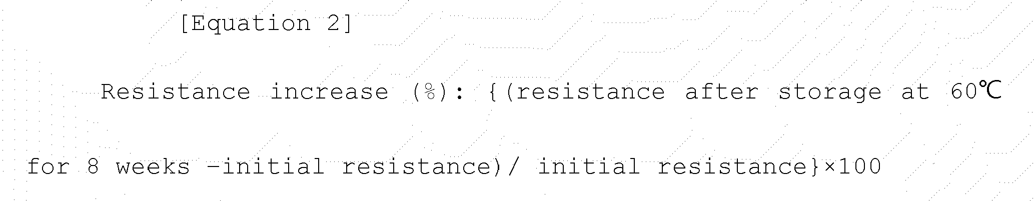 Resistance increase (%): { (resistance after storage at 60°C for 8 weeks -initial resistance)/ initial resistance}×100

**[Table 1]**

| | After storage at 60°C for 8 weeks | |
|---|---|---|
| | Capacity retention (%) | Resistance increase (%) |
| Example 1 | 90.04 | -4.91 |
| Example 2 | 89.74 | -3.12 |
| Example 3 | 90.67 | -6.38 |
| Example 4 | 90.93 | -5.22 |
| Example 5* | 89.53 | -2.35 |
| Comparative Example 1 | 89.59 | -1.64 |

| | | |
|---|---|---|
| *Not in accordance with the claims | | |

Referring to Table 1 above, it was confirmed that with respect to the lithium secondary batteries of Examples 1 to 4 including the non-aqueous electrolyte solution of the present disclosure, the capacity retentions (%) were improved after high temperature storage at 60°C compared to the lithium secondary battery of Comparative Example 1 wherein the additive was not included.

Referring to these results, with respect to the lithium secondary batteries of Examples 1 to 4, since an effect of scavenging the thermal decomposition product of the lithium salt and an effect of strengthening the durability of the SEI may be secured by introducing the compound with an excellent binding force with the Lewis acid as the electrolyte solution additive, a reaction, in which the SEI is additionally formed by an additional decomposition reaction of the electrolyte, may be suppressed, and thus, it may be confirmed that stable operation of the battery may be achieved.

With respect to the lithium secondary battery of Example 5 in which a rather large amount of the additive was included, it may be confirmed that the capacity retention and the resistance increase rate were relatively decreased compared to those of the secondary batteries of Examples 1 to 4.

### Experimental Example 2. Gas analysis after high temperature storage

After the lithium secondary batteries prepared in Examples 1 to 5 and the lithium secondary battery prepared in Comparative Example 1 were charged at 0.33 C rate to 4.2 V under a constant current/constant voltage condition at room temperature (25°C.), and were stored at 60°C for 8 weeks. After high-temperature storage for 8 weeks, the amount of gas generated in the secondary batteries was measured, and the results thereof are then presented in Table 2 below.

**[Table 2]**

| | CO₂ generation amount (uL) | CO generation amount (uL) | Hydrocarbon generation amount (uL) | Total amount (uL) |
|---|---|---|---|---|
| Example 1 | 955 | 76 | 634 | 1665 |
| Example 2 | 1103 | 71 | 727 | 1901 |
| Example 3 | 852 | 76 | 450 | 1378 |
| Example 4 | 936 | 79 | 578 | 1593 |
| Example 5* | 1172 | 84 | 801 | 2057 |
| Comparative Example 1 | 1160 | 70 | 750 | 1980 |

| | | | | |
|---|---|---|---|---|
| *Not in accordance with the claims | | | | |

Referring to the results of Table 2, it may be confirmed that with respect to the secondary batteries of Examples 1 to 4, the amount of gas generated was greatly reduced compared to the secondary battery of Comparative Example 1.

That is, in the case of the secondary battery of Example 1 wherein the non-aqueous electrolyte solution including the compound represented by Formula 1a was used, it appears that the amount of gas generated was relatively reduced compared to the secondary battery of Comparative Example 1 by effectively removing the Lewis acids inside the non-aqueous electrolyte solution to suppress the deterioration behaviors of films.

On the other hand, in the case of the lithium secondary battery of Example 5 wherein a non-aqueous electrolyte solution including a rather large amount of the additive was used, as side reactions caused by the additive slightly increased, it may be understood that the amount of gas generated was slightly increased compared to the secondary batteries of Examples 1 to 4.

## Claims

1. A non-aqueous electrolyte solution for a lithium secondary battery, comprising a lithium salt, an organic solvent, and an additive which is a compound represented by Formula 1: 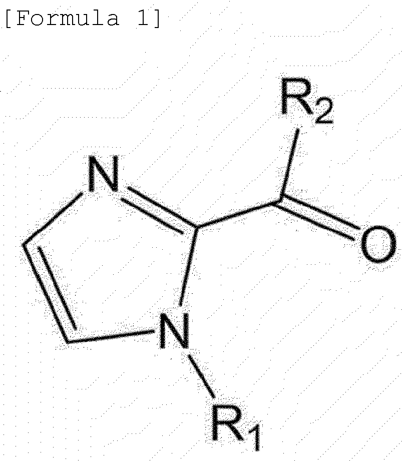
wherein, in Formula 1, R₁ and R₂ are each independently an alkyl group having 1 to 10 carbon atoms; and
wherein the additive is present in an amount of 0.05 wt% to 5.5 wt% based on the total content of the non-aqueous electrolyte solution.

2. The non-aqueous electrolyte solution according to claim 1, wherein R₁ and R₂ are each independently an alkyl group having 1 to 7 carbon atoms.

3. The non-aqueous electrolyte solution according to claim 1, wherein R₁ and R₂ are each independently an alkyl group having 1 to 5 carbon atoms.

4. The non-aqueous electrolyte solution according to claim 1, wherein R₁ is an alkyl group having 1 to 3 carbon atoms, and R₂ is an alkyl group having 1 to 5 carbon atoms.

5. The non-aqueous electrolyte solution according to claim 1, wherein the compound represented by Formula 1 comprises at least one of the compounds represented by Formulas 1a to 1c:

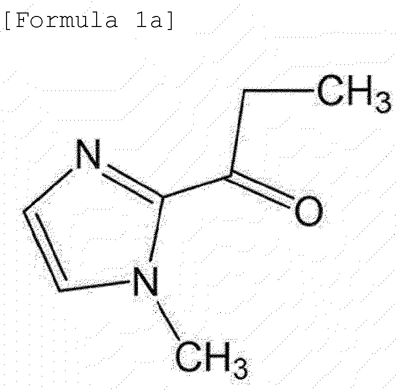

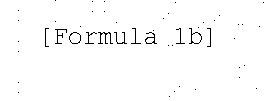

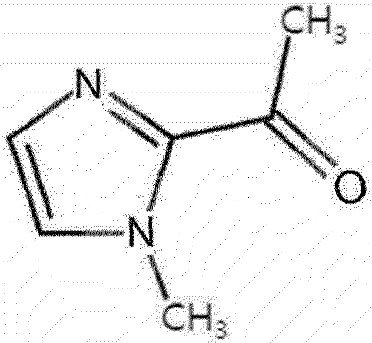

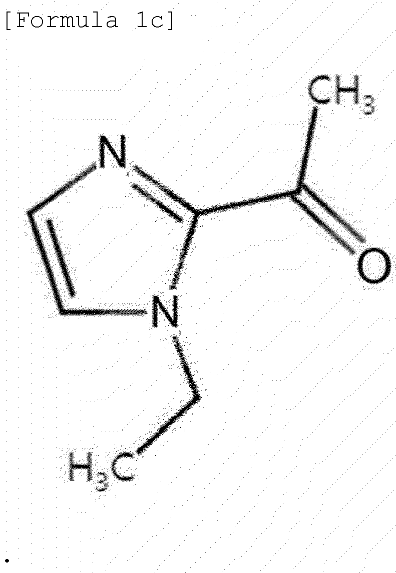

6. The non-aqueous electrolyte solution according to claim 1, wherein the additive is present in an amount of 0.1 wt% to 5.0 wt% based on the total content of the non-aqueous electrolyte solution.

7. The non-aqueous electrolyte solution according to claim 1, wherein the additive is present in an amount of 0.1 wt% to 3.5 wt% based on the total content of the non-aqueous electrolyte solution.

8. The non-aqueous electrolyte solution according to claim 1, further comprising at least one other additive selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

9. A lithium secondary battery comprising a positive electrode, a separator, a negative electrode, and the non-aqueous electrolyte solution of claim 1.

## Patentansprüche

1. Nichtwässrige Elektrolytlösung für eine Lithium-Sekundärbatterie, umfassend ein Lithiumsalz, ein organisches Lösungsmittel, und ein Additiv, bei dem es sich um eine Verbindung der Formel 1 handelt: 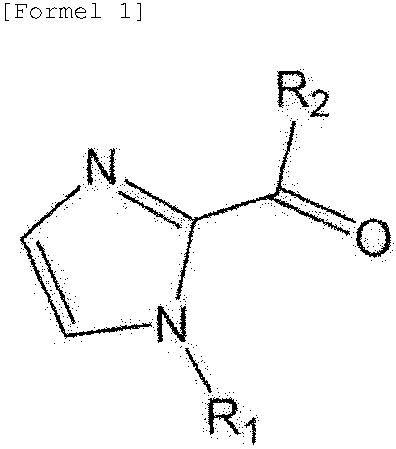
wobei in Formel 1 R₁ und R₂ jeweils unabhängig voneinander eine Alkylgruppe mit 1 bis 10 Kohlenstoffatomen sind; und
wobei das Additiv in einer Menge von 0,05 Gew.-% bis 5,5 Gew.-%, bezogen auf den Gesamtgehalt der nichtwässrigen Elektrolytlösung, vorliegt.

2. Nichtwässrige Elektrolytlösung gemäß Anspruch 1, wobei R₁ und R₂ jeweils unabhängig voneinander eine Alkylgruppe mit 1 bis 7 Kohlenstoffatomen sind.

3. Nichtwässrige Elektrolytlösung gemäß Anspruch 1, wobei R₁ und R₂ jeweils unabhängig voneinander eine Alkylgruppe mit 1 bis 5 Kohlenstoffatomen sind.

4. Nichtwässrige Elektrolytlösung gemäß Anspruch 1, wobei R₁ eine Alkylgruppe mit 1 bis 3 Kohlenstoffatomen ist, und R₂ eine Alkylgruppe mit 1 bis 5 Kohlenstoffatomen ist.

5. Nichtwässrige Elektrolytlösung gemäß Anspruch 1, wobei die durch Formel 1 dargestellte Verbindung mindestens eine der durch die Formeln 1a bis 1c dargestellten Verbindungen umfasst:

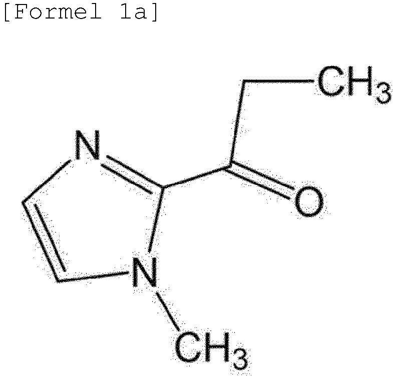

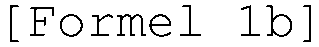

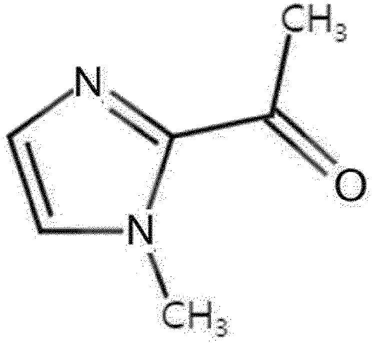

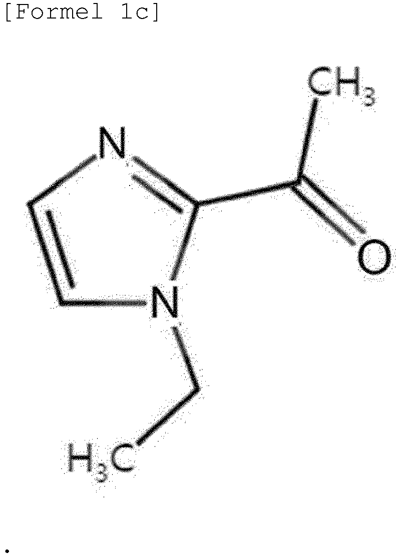

6. Nichtwässrige Elektrolytlösung gemäß Anspruch 1, wobei das Additiv in einer Menge von 0,1 Gew.-% bis 5,0 Gew.-%, bezogen auf den Gesamtgehalt der nichtwässrigen Elektrolytlösung, vorliegt.

7. Nichtwässrige Elektrolytlösung gemäß Anspruch 1, wobei das Additiv in einer Menge von 0,1 Gew.-% bis 3,5 Gew.-%, bezogen auf den Gesamtgehalt der nichtwässrigen Elektrolytlösung, vorliegt.

8. Nichtwässrige Elektrolytlösung gemäß Anspruch 1, ferner umfassend mindestens ein weiteres Additiv, ausgewählt aus einer cyclischen Verbindung auf Carbonatbasis, einer halogensubstituierten Verbindung auf Carbonatbasis, einer Verbindung auf Sultonbasis, einer Verbindung auf Sulfatbasis, einer Verbindung auf Phosphatbasis, einer Verbindung auf Boratbasis, einer Verbindung auf Nitrilbasis, einer Verbindung auf Benzolbasis, einer Verbindung auf Aminbasis, einer Verbindung auf Silanbasis, und einer Verbindung auf Lithiumsalzbasis.

9. Lithium-Sekundärbatterie, umfassend eine positive Elektrode, einen Separator, eine negative Elektrode, und die nichtwässrige Elektrolytlösung gemäß Anspruch 1.

## Revendications

1. Solution électrolytique non aqueuse pour une batterie secondaire au lithium, comprenant un sel de lithium, un solvant organique, et un additif qui est un composé représenté par la formule 1 : 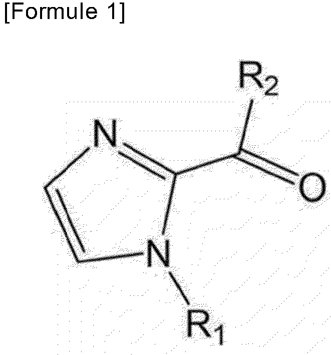
dans laquelle, dans la formule 1, R₁ et R₂ représentent chacun indépendamment un groupe alkyle présentant 1 à 10 atomes de carbone ; et
dans laquelle l'additif est présent en une quantité de 0,05 % en poids à 5,5 % en poids sur la base de la teneur totale de la solution électrolytique non aqueuse.

2. Solution électrolytique non aqueuse selon la revendication 1, dans laquelle R₁ et R₂ représentent chacun indépendamment un groupe alkyle présentant 1 à 7 atomes de carbone.

3. Solution électrolytique non aqueuse selon la revendication 1, dans laquelle R₁ et R₂ représentent chacun indépendamment un groupe alkyle présentant 1 à 5 atomes de carbone.

4. Solution électrolytique non aqueuse selon la revendication 1, dans laquelle R₁ est un groupe alkyle présentant 1 à 3 atomes de carbone, et R₂ est un groupe alkyle présentant 1 à 5 atomes de carbone.

5. Solution électrolytique non aqueuse selon la revendication 1, dans laquelle le composé représenté par la formule 1 comprend au moins un des composés représentés par les formules 1a à 1c :

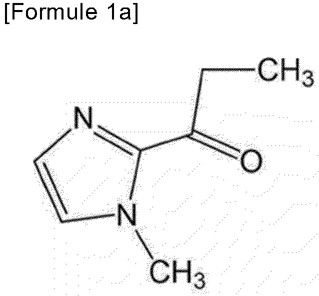

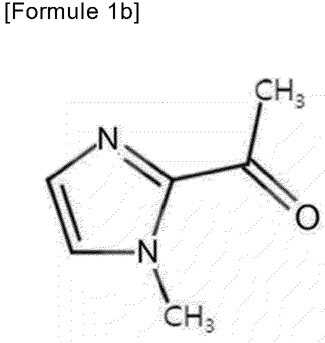

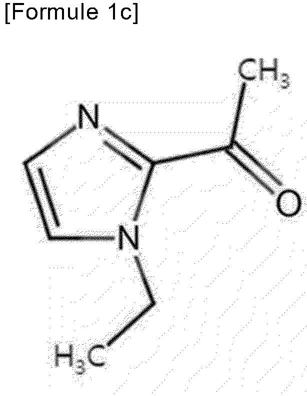

6. Solution électrolytique non aqueuse selon la revendication 1, dans laquelle l'additif est présent en une quantité de 0,1 % en poids à 5,0 % en poids sur la base de la teneur totale de la solution électrolytique non aqueuse.

7. Solution électrolytique non aqueuse selon la revendication 1, dans laquelle l'additif est présent en une quantité de 0,1 % en poids à 3,5 % en poids sur la base de la teneur totale de la solution électrolytique non aqueuse.

8. Solution électrolytique non aqueuse selon la revendication 1, comprenant en outre au moins un autre additif choisi dans le groupe constitué d'un composé à base de carbonate cyclique, d'un composé à base de carbonate substitué par un halogène, d'un composé à base de sultone, d'un composé à base de sulfate, d'un composé à base de phosphate, d'un composé à base de borate, d'un composé à base de nitrile, d'un composé à base de benzène, d'un composé à base d'amine, d'un composé à base de silane, et d'un composé à base de sel de lithium.

9. Batterie secondaire au lithium comprenant une électrode positive, un séparateur, une électrode négative, et la solution électrolytique non aqueuse selon la revendication 1.
